# EUROPÄISCHE PATENTSCHRIFT

(11) **EP 2 865 897 B1**
(45) Veröffentlichungstag und Bekanntmachung des Hinweises auf die Patenterteilung: **27.04.2016**
(21) Anmeldenummer: 14182185.0
(22) Anmeldetag: 26.08.2014
(51) Int. Cl.: F01D 25/24, F02C 6/12, F04D 29/42, F04D 29/62

(54) **Vorrichtung für einen Turbolader**
Device for a turbocharger
Dispositif pour un turbochargeur

(30) Priorität: 26.08.2013 DE 102013109222
(43) Veröffentlichungstag der Anmeldung: 29.04.2015
(73) Patentinhaber: ABB Turbo Systems AG, 5400 Baden (CH)
(72) Erfinder: Albiez, Bernd, 79736 Rickenbach (DE); Tröndle, Hans, 79725 Laufenburg (DE); Jarusel, Matthias, 79774 Albbruck (DE)
(74) Vertreter: ABB Patent Attorneys

(56) Entgegenhaltungen:
- EP-A2- 2 395 203
- WO-A1-02/090722
- US-A- 2 933 044
- US-A1- 2005 232 762

## Beschreibung

### TECHNISCHES GEBIET

Die vorliegende Erfindung bezieht sich auf das Gebiet der Turbolader. Sie betrifft eine Vorrichtung für einen Turbolader, wobei die Vorrichtung ein Lufteintrittsgehäuse, ein inneres Verdichtergehäuse und ein äusseres Verdichtergehäuse umfasst.

### STAND DER TECHNIK

Turbolader, welche auch als Abgasturbolader bezeichnet werden, umfassen im Allgemeinen einen Verdichter und eine Abgasturbine, welche über eine gemeinsame Welle mechanisch miteinander verbunden sind. Abgase einer Kolbenmaschine werden der Abgasturbine zugeführt. Da diese Abgase unvollständig expandiert sind, wird ein Teil der noch vorhandenen Energie des Abgases in Rotationsenergie der Abgasturbine umgewandelt. Die Rotationsenergie der Abgasturbine wird über die Welle auf den Verdichter übertragen, welcher die der Kolbenmaschine zugeführte Frischluft verdichtet.

So kann die Kolbenmaschine mit deutlich mehr Frischluft aufgeladen werden, was zu einer Erhöhung der Leistungsdichte der Kolbenmaschine führt.

Bei dem Verdichter tritt Frischluft durch ein Lufteintrittsgehäuse, welches Lufteintrittsgehäuse beispielsweise ein Filterschalldämpfer oder ein Luftansaugstutzen sein kann, in ein Verdichtergehäuse. Das Verdichtergehäuse umschliesst ein Verdichterrad. Durch Rotation des Verdichterrads wird Rotationsenergie des Verdichterrads in Kompressionsenergie der Frischluft umgewandelt und die Frischluft so verdichtet. Das Verdichtergehäuse ist oft in ein strömungsführendes inneres Verdichtergehäuse und in ein abschliessendes äusseres Verdichtergehäuse geteilt.

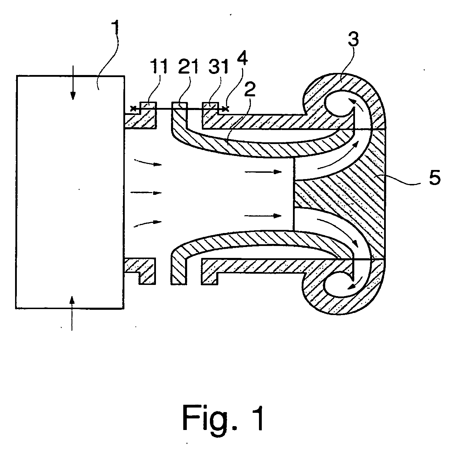

Fig. 1 zeigt eine schematische Darstellung einer Vorrichtung für einen Turbolader aus dem Stand der Technik zusammen mit einem Verdichterrad. Das Verdichterrad 5 ist von einem inneren Verdichtergehäuse 2 und einem äusseren Verdichtergehäuse 3 umschlossen. Frischluft wird durch einen Filterschalldämpfer 1 angesogen und durch einen Strömungskanal, welcher Strömungskanal durch ein inneres Verdichter Gehäuse 2 gebildet wird, dem Verdichterrad 5 zugeführt.

Nach der Verdichtung der Frischluft durch das Verdichterrad 5 wird die verdichtete Frischluft durch das äussere Verdichtergehäuse 3 abgeführt und einer nicht dargestellten Kolbenmaschine zugeführt. Das äussere Verdichtergehäuse 3 ist mit einem nicht dargestellten Lagergehäuse des Turboladers verbunden und so im Raum positioniert. Das äussere Verdichtergehäuse 3, das innere Verdichtergehäuse 2 und das Lufteintrittsgehäuse 1 sind über eine Flanschverbindung miteinander verbunden. Bei der Flanschverbindung sind ein Flansch 11 des Lufteintrittsgehäuses 1, ein Flansch 21 des inneren Verdichtergehäuses 2 und ein Flansch 31 des äusseren Verdichtergehäuses 3 mittels Schraubenverbindungen 4 aneinandergepresst. Dabei ist der Flansch 21 des inneren Verdichtergehäuses 2 zwischen dem Flansch 11 des Lufteintrittsgehäuses 1 und dem Flansch 31 des äusseren Verdichtergehäuses 3 angeordnet.

Da der maximale Durchmesser des Lufteintrittsgehäuses und der maximale Durchmesser des äusseren Verdichtergehäuses oft grösser ist als der Durchmesser der jeweiligen Flansche, sind die Schraubenverbindungen der Flanschverbindung schlecht zugänglich und es ist schwierig die Schrauben in dazugehörigen Bohrungen nach dem Zusammensetzen der Teile einzuführen.

Allgemein wird dieses Problem durch Schraubenverbindungen gelöst, welche Schraubenverbindungen einen in das äussere Verdichtergehäuse eingeschraubte Stehbolzen umfassen, wobei der Flansch des inneren Verdichtergehäuses und der Flansch des Lufteintrittsgehäuses mittels Muttern auf den Stehbolzen befestigt sind. Dies ermöglicht eine beschränkte Zugänglichkeit der Schraubenverbindungen bei limitierten Platzverhältnissen in axialer Richtung der Schraubenverbindung. Diese Lösung hat den Nachteil, dass die Zugänglichkeit immer noch unbefriedigend ist und ein Anziehen bzw. Lösen der Schraubenverbindungen beim Montieren bzw. Demontieren des Lufteinlassgehäuses sehr viel Zeit benötigt.

Eine Vorrichtung für einen Turbolader mit den Merkmalen des

Oberbegriffs des Anspruchs 1 ist in der Druckschrift WO 02/090722 A1 offenbart.

### DARSTELLUNG DER ERFINDUNG

Aufgabe der vorliegenden Erfindung ist es, eine Vorrichtung für einen Turbolader anzugeben, welche eine verbesserte Zugänglichkeit aufweist und ein schnelleres Montieren bzw. Demontieren des Lufteintrittgehäuses ermöglicht.

Diese Aufgabe wird durch eine Vorrichtung für einen Turbolader mit den Merkmalen des Patentanspruches 1 gelöst. Bevorzugte Ausführungsformen sind Gegenstand der abhängigen Patentansprüche.

Gegenstand der Erfindung ist es, dass die Vorrichtung eine Flanschverbindung mit zwei verschiedenen Typen von Schraubenverbindungen umfasst. Der erste Typ von Schraubenverbindungen sind Kurzverbindungen. Diese Kurzverbindungen verbinden das innere Verdichtergehäuse mit dem äusseren Verdichtergehäuse, ohne dabei eine Verbindung mit dem Lufteintrittsgehäuses herzustellen. Der zweite Typ von Schraubenverbindungen sind Langverbindungen. Diese Langverbindungen verbinden das Lufteintrittsgehäuses, das innere Verdichtergehäuse und das äussere Verdichtergehäuse miteinander. Dadurch wird ein schnelles lösen des Lufteintrittsgehäuses und eine verbesserte Zugänglichkeit ermöglicht.

Eine erste bevorzugte Ausführungsform umfasst mindestens eine Aussparung in einem Flansch des Lufteintrittsgehäuses. Diese Aussparung ist derart gestaltet, dass eine in der Aussparung angeordnete Kurzverbindung, welche zusammengebaut ist und ihre verbindende Wirkung aufweist, nicht eine Hinterschneidung mit dem Lufteintrittsgehäuse in axialer Richtung der Kurzverbindungen bildet. So stellt die Kurzverbindung keinen Formschluss in axialer Richtung der Kurzverbindungen mit dem Lufteintrittsgehäuse her, beispielsweise wenn der Durchmesser des Aussparung grösser ist als der Durchmesser der Schraube der Kurzverbindung.

Dies ermöglicht eine einfache Herstellung der Vorrichtung.

Eine weitere vorteilhafte Ausführungsform betrifft eine Vorrichtung, bei welcher Vorrichtung mindestens 45 Prozent der Schraubenverbindungen Kurzverbindungen sind. Dies ermöglicht im Falle eine Kollision von Teilen im Inneren eines Turbolader und einer daraus folgenden Verschiebung des inneren Verdichtergehäuses, dass das Lufteintrittsgehäuses sicher durch die Flanschverbindung fixiert ist und nicht abgeschert wird.

Eine weitere vorteilhafte Ausführungsform betrifft eine Vorrichtung, welche Vorrichtung eine Kurzverbindung mit einer Hülse aufweist. Die Länge der Hülse wird so gestaltet, dass eine Mutter der Kurzverbindung in radialer Richtung der Kurzverbindung zugänglich ist, beispielsweise mit einem Maulschlüssel. Vorzugsweise ist die Mutter der Kurzverbindung durch die Hülse axial an der gleichen Stelle positioniert wie die Mutter einer Langverbindung. Dies ermöglicht eine einfachere Montage der Vorrichtung.

Eine weitere vorteilhafte Ausführungsform betrifft eine Vorrichtung, welche Vorrichtung Rippen zwischen dem Lufteintrittsgehäuse und dem Flansch des Lufteintrittgehäuses im Bereich einer Kurzverbindung aufweist. Dies ermöglicht eine verbesserte Zugänglichkeit der Schraubenverbindungen, da die Kurzverbindung bereits vor der Positionierung des Lufteintrittsgehäuses angezogen werden kann und so die Rippen bei Anziehen nicht stören.

Eine weitere vorteilhafte Ausführungsform betrifft eine Vorrichtung, bei welcher Vorrichtung alle Schraubenverbindungen in Aussparungen angeordnet sind und die Langverbindungen Unterlegscheiben umfassen. Die Unterlegscheiben stellen einen Formschluss zwischen den Langverbindungen und dem Lufteintrittsgehäuses her. Vorzugsweise sind alle Aussparungen identisch. Dies ermöglicht eine vereinfachte Herstellung der Vorrichtung und reduziert die Gefahr von Montagefehlern.

### KURZE BESCHREIBUNG DER FIGUREN

Nachfolgend wird die Erfindung anhand von Ausführungsbeispielen im Zusammenhang mit den Figuren näher erläutert. Die Figuren zeigen eine schematische Darstellung:
- Figur 1: einer Vorrichtung für einen Turbolader aus dem Stand der Technik zusammen mit einem Verdichterrad;
- Figur 2: eines Axialschnittes einer erfindungsgemässen Vorrichtung mit einem montierten Lufteintrittgehäuse; und
- Figur 3: einer perspektivischen Ansicht einer erfindungsgemässen Vorrichtung mit einem demontierten Lufteintrittgehäuse.

Die in den Zeichnungen verwendeten Bezugszeichen sind in der Bezugszeichenliste zusammengefasst. Grundsätzlich sind gleiche Teile mit denselben Bezugszeichen versehen.

### WEGE ZUR AUSFÜHRUNG DER ERFINDUNG

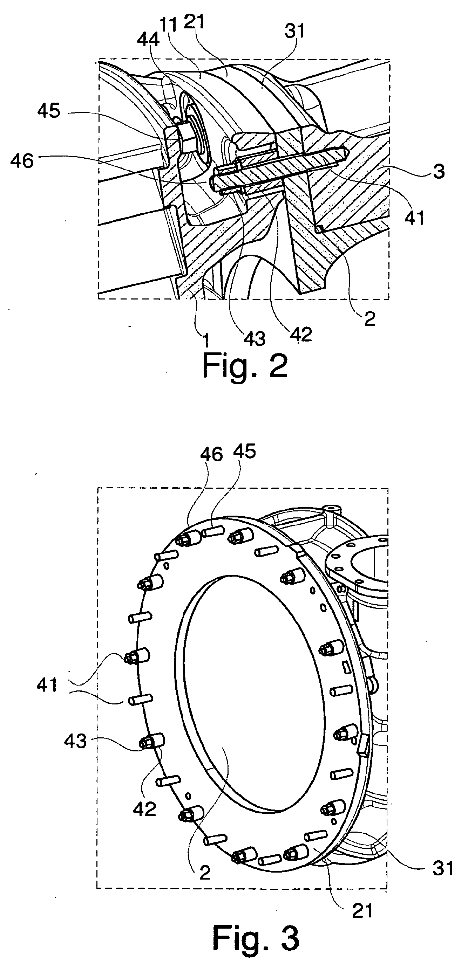

Fig. 2 zeigt eine schematische Darstellung einer erfindungsgemässen Vorrichtung für einen Turbolader mit einem montierten Lufteintrittgehäuse, wobei die Vorrichtung einen Filterschalldämpfer 1, ein inneres Verdichtergehäuse 2, ein äusseres Verdichtergehäuse 3 und eine Flanschverbindung mit Schraubenverbindungen umfasst. Das äussere Verdichtergehäuse 3 weist Gewindebohrungen in einem Flansch 31 des äusseren Verdichtergehäuses 3 auf, in welchen Gewindebohrungen Stehbolzen 41 eingeschraubt sind.

Ein Flansch 21 des inneren Verdichtergehäuses 2 und ein Flansch 11 des Filterschalldämpfers 1 weisen Bohrungen auf, welche Bohrungen koaxial zu den Stehbolzen 41 angeordnet sind und für die Schraubenverbindungen genutzt werden. Nur jede zweite Schraubenverbindung ist eine Langverbindung 45, welche Langverbindung 45 den Filterschalldämpfer 1, das innere Verdichtergehäuse 2 und das äussere Verdichtergehäuse 3 miteinander verbindet. Die übrigen Schraubenverbindungen sind Kurzverbindungen 46, welche Kurzverbindungen 46 eine Verbindung zwischen dem inneren Gaseintritt dem inneren Verdichtergehäuse 2 und dem äusseren Verdichtergehäuse 3 herstellen ohne dabei den Filterschalldämpfer 1 in die Verbindung mit einzuschliessen. Die Bohrungen in dem Flansch 11 des Filterschalldämpfer 1 weisen zylinderförmige Aussparungen auf so, dass der Durchmesser der Aussparungen grösser ist als der maximale Durchmesser der für die Schraubenverbindungen verwendeten Muttern 43. Bei den Kurzverbindungen 46 ist zwischen den Muttern 43 und dem Flansch 21 des inneren Verdichtergehäuses 2 jeweils eine Hülse 42 angeordnet. Die Hülse 42 weist einen kleineren Durchmesser auf als die Bohrungen in dem Flansch 11 des Filterschalldämpfers 1. So bringen die Muttern 43 der Kurzverbindungen 46 die Kraft zum Anpressen des Flansch 21 des inneren Verdichtergehäuses 22 und dem Flansch 31 des äusseren Verdichtergehäuses 3 auf ohne direkt an dem Flansch 21 des inneren Gaseintritts des inneren Verdichtergehäuses 2 angeordnet zu sein. Dabei wird die Druckkraft, die von den Muttern 43 der Kurzverbindungen 46 auf die Hülsen 42 ausgeübt wird, durch die Hülsen 42 auf den Flansch 21 des inneren Verdichtergehäuse 2 übertragen. Die Länge der Hülse ist so gewählt, dass die Mutter 43 der Kurzverbindungen 46 ausserhalb der Bohrungen in dem Flansch 11 des Filterschalldämpfer 1 im verspannten Zustand angeordnet sind und, so eine Zugänglichkeit in radialen Richtung der Schraubenverbindungen gewähren. Also ist die Hülse ungefähr so lang wie die Dicke des Flansches 11 der Filterschalldämpfers 1 oder länger als die Dicke des Flansches 11 unter Berücksichtigung des zu Verfügung stehenden Platzes in axialer Richtung der Schraubenverbindungen. Bei den Langverbindungen ist zwischen den Muttern 43 und dem Flansch 21 des inneren Verdichtergehäuses 2 jeweils eine Unterlegscheibe 44 angeordnet. Die Unterlegscheiben 44 weisen einen grösseren maximalen Durchmesser auf als die Bohrungen des Flansches 11 des Filterschalldämpfers 1 auf so, dass die der Mutter 43 gegenüberliegende Seite der Unterlegscheibe 44 auf einer Schulter des Flansches 11 des Filterschalldämpfers 1 aufliegt und so den Filterschalldämpfer mit dem inneren Verdichtergehäuse 2 und dem äusseren Verdichtergehäuse 3 verbindet.

Figur 3 zeigt eine schematische Darstellung einer perspektivischen Ansicht mit einem demontierten Lufteintrittsgehäuse. Die Stehbolzen 41 sind in einem Schraubenkreis auf dem Flansch 31 des äusseren Verdichtergehäuses 3 angeordnet. Das innere Verdichtergehäuse 2 weist Bohrungen in dem Flansch 21 des inneren Verdichtergehäuses 2 auf und wird mit Hilfe der Stehbolzen 41 und der Bohrungen auf das äussere Verdichtergehäuse 3 aufgesteckt. Jeder zweiter Stehbolzen 41 ist mit einer Hülse 42 und einer Mutter 43 versehen so, dass diese Kurzverbindungen 46 eine Verbindung zwischen dem äusseren Verdichtergehäuse 3 und dem inneren Verdichtergehäuse 2 herstellen. Über die noch unbestückten Langverbindungen 45 und die bereits angezogenen Kurzverbindungen 46 wird danach der in dieser Figur nicht dargestellte Filterschalldämpfer gestülpt. Auf die Stehbolzen 41 der Langverbindungen 45 werden danach Unterlegscheiben 44 gelegt welche auf der Schulter des Flansch des Filterschalldämpfers aufliegen und mithilfe von Muttern verspannt werden.

Optional ist es möglich anstatt der Unterlegscheiben auch andere formschliessende Elemente zu verwenden oder die Bohrungen für die Langverbindungen so zu dimensionierten, dass der Durchmesser der Bohrungen im Bereich der Muttern kleiner ist als der maximale Durchmesser der Muttern so, dass eine dem Flansch des Filterschalldämpfers zugewandte Seite der Muttern auf einer Schulter des Flansches des Filterschalldämpfers aufliegt und so einen Formschluss mit dem Flansch des Filterschalldämpfer herstellt. Es ist möglich die Hülse wegzulassen und die Mutter der Kurzverbindungen direkt auf den Flansch des inneren Verdichtergehäuses aufzuschreiben. Das Verhältnis zwischen Kurzverbindungen und Langverbindungen musst nicht 1 zu 1 betragen und kann den Anforderungen der mechanischen Beanspruchungen entsprechend variiert werden. Die räumliche Verteilung der Stehbolzen auf dem Flansch des äusseren Verdichtergehäuses kann variabel gestaltet werden.

### BEZUGSZEICHENLISTE

- 1: Filterschalldämpfer
- 11: Flansch des Filterschalldämpfers
- 2: inneres Verdichtergehäuse
- 21: Flansch des inneren Verdichtergehäuses
- 3: äusseres Verdichtergehäuse
- 31: Flansch des äusseren Verdichtergehäuses
- 4: Schraubenverbindung
- 41: Stehbolzen
- 42: Hülse
- 43: Mutter
- 44: Unterlegscheibe
- 45: Langverbindung
- 46: Kurzverbindung
- 5: Verdichterrad

## Patentansprüche

1. Vorrichtung für einen Turbolader umfassend
ein Lufteintrittsgehäuse (1),
welches Lufteintrittsgehäuse (1) einen Flansch (11) aufweist,
ein inneres Verdichtergehäuse (2),
welches innere Verdichtergehäuse einen Flansch (21) aufweist, und
ein äusseres Verdichtergehäuse (3),
welches äussere Verdichtergehäuse einen Flansch (31) aufweist,
wobei das Lufteintrittsgehäuse (1), das innere Verdichtergehäuse (2) und das äussere Verdichtergehäuse (3) über eine Flanschverbindung miteinander mechanisch verbunden sind,
welche Flanschverbindung den Flansch (11) des Lufteintrittsgehäuses (1), den Flansch (21) des inneren Verdichtergehäuses (2) und den Flansch (31) des äusseren Verdichtergehäuses (3) mittels Schraubenverbindungen (4) verbindet, wobei
der Flansch (21) des inneren Verdichtergehäuses (2) zwischen dem Flansch (11) des Lufteintrittsgehäuses (1) und dem Flansch (31) des äusseren Verdichtergehäuses (3) angeordnet ist,
**dadurch gekennzeichnet, dass**
die Schraubenverbindungen (4) einen ersten Typ von kurzen Schraubenverbindungen (46) umfassen, welche Kurzverbindungen (46) von dem Lufteintrittsgehäuse (1), dem innere Verdichtergehäuse (2) und dem äussere Verdichtergehäuse (3) lediglich das innere Verdichtergehäuse (2) und das äussere Verdichtergehäuse (3) miteinander verbinden, und
die Schraubenverbindungen (4) einen zweiten Typ von langen Schraubenverbindungen (45) umfassen, welche Langverbindungen (45) das Lufteintrittsgehäuse (1), das innere Verdichtergehäuse (2) und das äussere Verdichtergehäuse (3) miteinander verbinden.

2. Vorrichtung nach Anspruch 1, wobei der Flansch (11) des Lufteintrittsgehäuses (1) eine Aussparung im Bereich mindestens einer Kurzverbindung (46) aufweist, welche Aussparung einen Durchmesser aufweist, welcher Durchmesser grösser ist als ein Durchmesser der Kurzverbindung, in deren Bereich die Aussparung angeordnet ist so, dass das Lufteintrittsgehäuse (1) durch die Aussparung über die Kurzverbindung (46) im verbundenen Zustand gestülpt werden kann.

3. Vorrichtung nach einem der Ansprüche 1 bis 2, wobei mindestens 45 Prozent der Schraubenverbindungen (4) Kurzverbindungen (46) sind.

4. Vorrichtung nach einem der Ansprüche 1 bis 3, wobei die Kurzverbindung (46) eine Mutter (43) und eine Hülse (42) aufweist, welche Hülse (42) zwischen einer Pressfläche des Flansches (21) des inneren Verdichtergehäuses (2) und des Flansches (31) des äusserem Verdichtergehäuses (3) und der Mutter (43) angeordnet ist und so lang ist, dass die Mutter (43) für einen der Mutter (43) entsprechenden Maulschlüssel in radialer Richtung der Kurzverbindung (46) zugänglich ist.

5. Vorrichtung nach einem der Ansprüche 1 bis 4, wobei der Flansch (11) des Lufteintrittsgehäuses (1) eine Rippe aufweist, welche Rippe zur mechanischen Verstärkung des Flansches (11) des Lufteintrittsgehäuses (1) dient und in einem Bereich des Flansches (11) des Lufteintrittsgehäuses (1) angeordnet ist, welcher Bereich die Aussparung aufweist.

6. Vorrichtungen nach Anspruch 1 bis 5, wobei der Flansch (11) des Lufteintrittsgehäuses (1) eine andere Aussparung im Bereich einer Langverbindung (45) aufweist, welche andere Aussparung mit der Aussparung identisch ist, wobei die Langverbindung (45) eine Unterlegscheibe (44) ausweist, welche Unterlegscheibe (44) so gestaltet ist, dass die Langverbindung (45) trotz der anderen Aussparung einen Formschluss in axialer Richtung Langverbindung (45) mit dem Lufteintrittsgehäuse (1), dem inneren Verdichtergehäuse (2) und dem äusserem Verdichtergehäuse (3) aufweist und so die Langverbindung (45) das Lufteintrittsgehäuse (1), das innere Verdichtergehäuse (2) und das äussere Verdichtergehäuse (3) miteinander verbindet.

7. Vorrichtungen nach Anspruch 1 bis 6, wobei eine der Schraubenverbindungen (4) einen Stehbolzen (41) aufweist, welcher Stehbolzen (41) in dem Flansch (11) des Lufteintrittsgehäuses (1) oder in dem Flansch (31) des äusseren Verdichtergehäuses (3) eingeschraubt ist.

8. Vorrichtungen nach Anspruch 1 bis 7, wobei die Schraubenverbindungen (4) auf einen Schraubenkreis angeordnet sind.

9. Turbolader mit einer Vorrichtung nach einem der Ansprüche 1 bis 8.

## Claims

1. Device for a turbocharger, comprising
an air inlet housing (1),
which air inlet housing (1) has a flange (11),
an inner compressor housing (2),
which inner compressor housing has a flange (21), and
an outer compressor housing (3),
which outer compressor housing has a flange (31),
wherein the air inlet housing (1), the inner compressor housing (2) and the outer compressor housing (3) are mechanically connected to one another by way of a flange connection,
which flange connection connects the flange (11) of the air inlet housing (1), the flange (21) of the inner compressor housing (2) and the flange (31) of the outer compressor housing (3) by way of screw connections (4), wherein
the flange (21) of the inner compressor housing (2) is arranged between the flange (11) of the air inlet housing (1) and the flange (31) of the outer compressor housing (3),
**characterized in that**
the screw connections (4) comprise a first type of short screw connections (46), which short connections (46) connect only the inner compressor housing (2) and the outer compressor housing (3), out of the air inlet housing (1), the inner compressor housing (2) and the outer compressor housing (3), to one another, and
the screw connections (4) comprise a second type of long screw connections (45), which long connections (45) connect the air inlet housing (1), the inner compressor housing (2) and the outer compressor housing (3) to one another.

2. Device according to Claim 1, wherein the flange (11) of the air inlet housing (1) has a hole in the region of at least one short connection (46), which hole has a diameter, which diameter is greater than a diameter of the short connection in the region of which the hole is arranged, such that the air inlet housing (1) can, by way of the hole, be mounted over the short connection (46) in the connected state.

3. Device according to either of Claims 1 and 2, wherein at least 45 percent of the screw connections (4) are short connections (46).

4. Device according to one of Claims 1 to 3, wherein the short connection (46) has a nut (43) and a sleeve (42), which sleeve (42) is arranged between a pressing surface of the flange (21) of the inner compressor housing (2) and of the flange (31) of the outer compressor housing (3) and the nut (43) and is of such a length that the nut (43) is accessible, in a radial direction of the short connection (46), to an open-ended spanner which corresponds to the nut (43).

5. Device according to one of Claims 1 to 4, wherein the flange (11) of the air inlet housing (1) has a rib, which rib serves for mechanical reinforcement of the flange (11) of the air inlet housing (1) and is arranged in a region of the flange (11) of the air inlet housing (1), which region has the hole.

6. Devices according to Claims 1 to 5, wherein the flange (11) of the air inlet housing (1) has another hole in the region of a long connection (45), which other hole is identical to the hole, wherein the long connection (45) has a shim washer (44), which shim washer (44) is designed such that the long connection (45), despite the other hole, has a form fit, in an axial direction of the long connection (45), with the air inlet housing (1), with the inner compressor housing (2) and with the outer compressor housing (3), and thus the long connection (45) connects the air inlet housing (1), the inner compressor housing (2) and the outer compressor housing (3) to one another.

7. Devices according to Claims 1 to 6, wherein one of the screw connections (4) has a stud bolt (41), which stud bolt (41) is screwed into the flange (11) of the air inlet housing (1) or into the flange (31) of the outer compressor housing (3).

8. Devices according to Claims 1 to 7, wherein the screw connections (4) are arranged on a screw circle.

9. Turbocharger having a device according to one of Claims 1 to 8.

## Revendications

1. Dispositif pour un turbocompresseur, comprenant
un boîtier d'entrée d'air (1),
lequel boîtier d'entrée d'air (1) présente une bride (11),
un boîtier de compresseur interne (2),
lequel boîtier de compresseur interne présente une bride (21), et
un boîtier de compresseur externe (3),
lequel boîtier de compresseur externe présente une bride (31),
le boîtier d'entrée d'air (1), le boîtier de compresseur interne (2) et le boîtier de compresseur externe (3) étant connectés mécaniquement les uns aux autres par le biais d'une liaison bridée,
laquelle liaison bridée relie la bride (11) du boîtier d'entrée d'air (1), la bride (21) du boîtier de compresseur interne (2) et la bride (31) du boîtier de compresseur externe (3) au moyen de connexions vissées (4),
la bride (21) du boîtier de compresseur interne (2) étant disposée entre la bride (11) du boîtier d'entrée d'air (1) et la bride (31) du boîtier de compresseur externe (3),
**caractérisé en ce que**
les liaisons vissées (4) comprennent un premier type de liaisons vissées courtes (46), lesquelles liaisons courtes (46) relient l'un à l'autre seulement le boîtier de compresseur interne (2) et le boîtier de compresseur externe (3) parmi le boîtier d'entrée d'air (1), le boîtier de compresseur interne (2) et le boîtier de compresseur externe (3), et
les liaisons vissées (4) comprennent un deuxième type de liaisons vissées longues (45), lesquelles liaisons longues (45) relient les uns aux autres le boîtier d'entrée d'air (1), le boîtier de compresseur interne (2) et le boîtier de compresseur externe (3).

2. Dispositif selon la revendication 1, dans lequel la bride (11) du boîtier d'entrée d'air (1) présente un évidement dans la région d'au moins une liaison courte (46), lequel évidement présente un diamètre qui est supérieur à un diamètre de la liaison courte, dans la région de laquelle est disposé l'évidement, de telle sorte que le boîtier d'entrée d'air (1) puisse être enfoncé par le biais de l'évidement par-dessus la liaison courte (46) dans l'état connecté.

3. Dispositif selon l'une quelconque des revendications 1 à 2, dans lequel au moins 45 % des liaisons vissées (4) sont des liaisons courtes (46).

4. Dispositif selon l'une quelconque des revendications 1 à 3, dans lequel la liaison courte (46) présente un écrou (43) et une douille (42), laquelle douille (42) est disposée entre une surface de pressage de la bride (21) du boîtier de compresseur interne (2) et de la bride (31) du boîtier de compresseur externe (3) et l'écrou (43), et a une longueur suffisante pour que l'écrou (43) soit accessible à une clé à fourche correspondant à l'écrou (43) dans la direction radiale de la liaison courte (46).

5. Dispositif selon l'une quelconque des revendications 1 à 4, dans lequel la bride (11) du boîtier d'entrée d'air (1) présente une nervure, laquelle nervure sert au renforcement mécanique de la bride (11) du boîtier d'entrée d'air (1) et est disposée dans une région de la bride (11) du boîtier d'entrée d'air (1), laquelle région présente l'évidement.

6. Dispositifs selon les revendications 1 à 5, dans lesquels la bride (11) du boîtier d'entrée d'air (1) présente un autre évidement dans la région d'une liaison longue (45), lequel autre évidement est identique à l'évidement, la liaison longue (45) présentant une rondelle (44), laquelle rondelle (44) est configurée de telle sorte que la liaison longue (45), malgré l'autre évidement, présente un engagement par correspondance de formes dans la direction axiale de la liaison longue (45) avec le boîtier d'entrée d'air (1), le boîtier de compresseur interne (2) et le boîtier de compresseur externe (3) et de telle sorte que la liaison longue (45) relie les uns aux autres le boîtier d'entrée d'air (1), le boîtier de compresseur interne (2) et le boîtier de compresseur externe (3).

7. Dispositifs selon les revendications 1 à 6, dans lesquels l'une des liaisons vissées (4) présente un boulon fileté (41), lequel boulon fileté (41) est vissé dans la bride (11) du boîtier d'entrée d'air (1) ou dans la bride (31) du boîtier de compresseur externe (3).

8. Dispositifs selon les revendications 1 à 7, dans lesquels les liaisons vissées (4) sont disposées sur un cercle de vissage.

9. Turbocompresseur comprenant un dispositif selon l'une quelconque des revendications 1 à 8.
